# EUROPEAN PATENT SPECIFICATION

(11) **EP 1 298 389 B1**
(45) Date of publication and mention of the grant of the patent: **15.06.2011**
(21) Application number: 00950133.9
(22) Date of filing: 05.07.2000
(51) Int. Cl.: F23D 11/10, F02K 9/52

(54) **COAXIAL SPRAY NOZZLE INJECTOR**
KOAXIALE DÜSE
BUSE A JETS COAXIAUX

(43) Date of publication of application: 02.04.2003
(73) Proprietor: Open Stock Company "Chemical Automatic Design Bureau", Voronezh, 394006 (RU); F.A.Legal Protection of M., Special and dual use Int. Act. Results under Ministry of Justice of the Russian Fed. (FAPRID), Moscow, 109028 (RU)
(72) Inventor: GOROKHOV, Viktor Dmitrievich, Voronezh, 394055 (RU); LOBOV, Sergey Dmitrievich, Voronezh, 394055 (RU); CHERNICHENKO, Vladimir Victorovich, Voronezh, 394088 (RU)
(74) Representative: Andrae, Steffen
(86) International application number: PCT/RU2000/000275
(87) International publication number: WO 2002/002990

(56) References cited:
- WO-A1-95/05560
- DE-A1- 3 835 381
- DE-A1- 3 835 381
- DE-C2- 2 040 827
- FR-A- 2 000 773
- FR-A2- 2 283 393
- SU-A1- 2 210
- SU-A1- 5 226
- US-A- 3 567 202
- US-A- 3 901 445
- US-A- 5 315 815
- US-A- 5 456 065
- US-A- 5 500 030
- PATENT ABSTRACTS OF JAPAN vol. 018, no. 432 (M-1654), 11 August 1994 (1994-08-11) -& JP 06 129617 A (NARITA SEITOUSHIYO:KK), 13 May 1994 (1994-05-13)

## Description

The invention relates to power plants, in particular to devices for mixing and atomizing propellant components, and may be used for the development of injection elements and injector heads of liquid-fuel rocket engines (LRE).

### Background of invention

One of the main problems in the development of devices for mixing and atomizing propellant components is to provide maximum attainable propellant combustion efficiency - what can be achieved through an increase of the propellant contact surface area and a decrease of the characteristic cross-section size of the jet of one of propellants.

Concerning known injector element designs, the realization of the above requirements leads to considerably complicated designs.

It is known a coaxial jet injection element having a tip in the form of a hollow cylinder which connects the cavity for the liquid oxidizer with the combustion zone (combustion chamber interior) and, further, a sleeve with a cylindrical internal surface that surrounds said tip forming a clearance connecting the cavity for the gaseous fuel with the combustion zone (V. E. Alemasov et al.: "Theory of rocket engines" Textbook for students acquiring machine-building specialization in higher education centers, Moscow, Publishing House "Mashinostrojenie", 1980, Fig. 18.2, pp. 225-226).

In this injection element the oxidizer is supplied into the combustion zone through the axial channel within the tip while the fuel is supplied through the annular gap between the sleeve and the tip. At the injection element outlet the jet of the oxidizer has the form of a solid cone directed with its vertex towards the tip of the injection element, while the jet of the fuel has the form of hollow cone. The fuel - oxidizer contact takes place on the surface of the solid cone. Such supply scheme does not provide an adequate quality of the atomizing of the propellants - what lowers the coefficient of propellant combustion efficiency and, as a consequence, leads to losses of the specific impulse value of the thrust.

It is known a powder coal burner comprised of a body with injection ports in its lateral surface and, further, a conical insert placed in front of the said ports, the conical insert having a conical corrugated extension mounted with the provision of an annular gap between said extension and the insert and with the possibility of the axial displacement of the said extension, the number of corrugations of the said extension being equal to the number of the ports in the body and the corrugation peaks being directed towards the central line of the body and positioned in front of respective ports (Cert. of invention, SU 1320593).

It is known a burner containing a tube connected with a gas source, the tube having an outlet nozzle with radial longitudinal grooves in its wall, the grooves being formed by longitudinal corrugations of said wall. The forward end faces of the corrugations are located on a cone with a cone generating line having an 45-180 ° angle inside the nozzle (Cert. of invention, SU Neo909432).

It is known a burner with a tube and an outlet nozzle having radial grooves in its wall (SU497650).

It is known an open injector for an internal combustion engine, which injector is characterized by an improved form of the sprayer outlet orifice, which form influences upon the propellant jet form in dependence of the propellant supply flow rate. Said injector provides a reliable inflammation and a full combustion of the working mixture because the injector orifice has a groove expanding towards the outlet, and the form of the the opening is preferably linear or curvilinear what gives the exit cross-section an asymmetric shape.

The opening may have an oval, rectangular or round form in cross-section or the form of two contiguous circumferences (patent application FR No 2420038 of 16.03.78).

A coaxial-jet injection element with the features of the preamble of claim 1 is known from documents US-A-5 315 815 and DE-A-3 835 381.

The main disadvantage of the above mentioned devices is the low value of the mixture formation completeness. This leads to an incomplete combustion of the propellants and a reduced efficiency.

### Disclosure of the invention

The task is to increase the propellant combustion efficiency by increasing the propellant contact area due to radial grooves formed by undulations provided on the tip outlet section. The provision of the undulations changes the jet form of one of the propellant components, transforming the round jet into the star-shaped cross-section jet having several radial rays, while the tip cross-section area remains unchanged. This will increase the propellant contact area due to the additional contact on the ray surface and will decrease the characteristic cross-section size of the jet of one of the propellant components thus increasing the combustion efficiency.

According to Claim 1 the invention task is achieved by a coaxial-jet injection element including a hollow tip (1) connecting a cavity of one component of a propellant with a combustion zone, and a sleeve (5) that surrounds said tip (1) providing a clearance and connecting a cavity of another component of the propellant, with the combustion zone, the tip having an outlet portion which is provided with undulations and surrounded by an outlet portion of the sleeve, wherein the inner surface of the outlet portion of the sleeve (5) is equidistant relative to the outer surface of the tip (1) outlet portion undulations.

In a preferred embodiment according to Claim 2 the outlet cross-section area between the inner surface of the sleeve (5) and the outer surface of the undulated tip (1) is Fₓ = (0,6-2,2)Fₒ, where Fₒ is the cross-section area at the tip outlet.

The increase of the propellant contact area at the injection element outlet and the reduced length of the non-atomized liquid jet are provided by changing the round jet form into the star-shaped jet with several radial rays.

Based on the results of tests of the subscale LOX-LH₂ combustion chamber in staged-combustion (fuel-rich scheme) engine performed for the testing of the injection elements made with radial undulations in the tip outlet part and with a cylindrical sleeve (not according to the invention), we have obtained a mixing efficiency ϕ_{κ} =0,997±0,0016 that exceeds the reference value ϕ_{κ}=0,994±0,0009 for reference injection elements with cylindrical tip and cylindrical sleeve. During the tests the oxidizer (oxygen) was supplied into the tip interior and fuel was supplied into the annular gap between the tip and the sleeve.

It should be noted that high mixing efficiency may be obtained with this injection element design on condition that the pre-burner gas flow rate values are maintained the same if compared with an ordinary coaxial injection element (Wᵣᵣ =300-350 m/s). This condition is realized when the exit cross-section for fuel is Fᵣ=(1,2-2,2) Fₒ, where Fo is the exit cross-section for the oxidizer.

However, for the expander-cycle engines (to the injection elements a liquid oxidizer, for example, oxygen and a gaseous fuel, for example, hydrogen, are supplied), the following expression Fᵣ = ( 0, 6-1, 0 ) Fₒ applies. A comparative analysis shows that the open flow area for the gaseous component in this case is ≈ 50% reduced. The use of injection elements with the ratio Fᵣ = (1, 2-2,2) Fₒ in an expander-cycle engine reduces the gas flow rate by 50% leading to a decrease of the propellant combustion efficiency. This has been proved in hot tests of injection elements with such design when tested as integrated into the model LOX-LH₂ expander cycle combustion chamber. The combustion efficiency in these tests was ϕ_{κ} = 0,9902 (instead of ϕ_{κ} =0, 994 ) .

It should be noted that the reduced flow rate of gas at the injection element outlet and the relative reduction of propellant flow rates ratio (Wᵣ/Wₒ) may lead to an unstable combustion process. At the realization of an equidistant clearance between the sleeve surfaces and tip surfaces according to the invention, with a cross-section area at the exit of Fᵣ(0,6-2,2)Fₒ, where Fo is the tip exit cross-section, the provision of the equal space between the inner surface of the sleeve outlet part and the outer surface of the tip undulations (ribs) will allow it to obtain the required gaseous propellant velocity at low fuel flow rates.

The low value of the mentioned ratio is selected based on the fact that at a further decrease a velocity increase of the gaseous propellant takes place, leading to an essential pressure drop increase and an increase of the engine operation intensity.

The upper value of the mentioned ratio is selected based on the fact that at its further increase there takes place a decrease of the gaseous propellant velocity, what leads to a drastic degradation of the mixing conditions and an eventual instability of the combustion process.

When the proposed coaxial-jet injection element with radial undulations in the tip outlet part and an equidistant profiled inner surface of the sleeve has been tested as integrated into the subscale LOX-LH₂ combustion chamber, the obtained mixture formation completeness was ϕ_{κ} =0,994±0,0016 - this value exceeds the reference injection element mixing efficiency ϕ_{κ} =0,9918±0,001. At tests, the oxidizer, that is oxygen, has been supplied into the tip interior, and the fuel has been supplied into the annular gap between the tip and the sleeve.

Brief description of the drawings: The proposed invention is illustrated with drawings. Fig. 1 shows the longitudinal section of the proposed injection element; Fig. 2 shows the cross-section of a coaxial-jet injection element exit with a sleeve having a cylindrical inner surface (not according to the invention); Fig. 3 shows the cross-section of the outlet part of the said coaxial-jet injection element with a sleeve having an inner surface that is equally spaced to the profiled surface of the tip undulations (according to the invention).

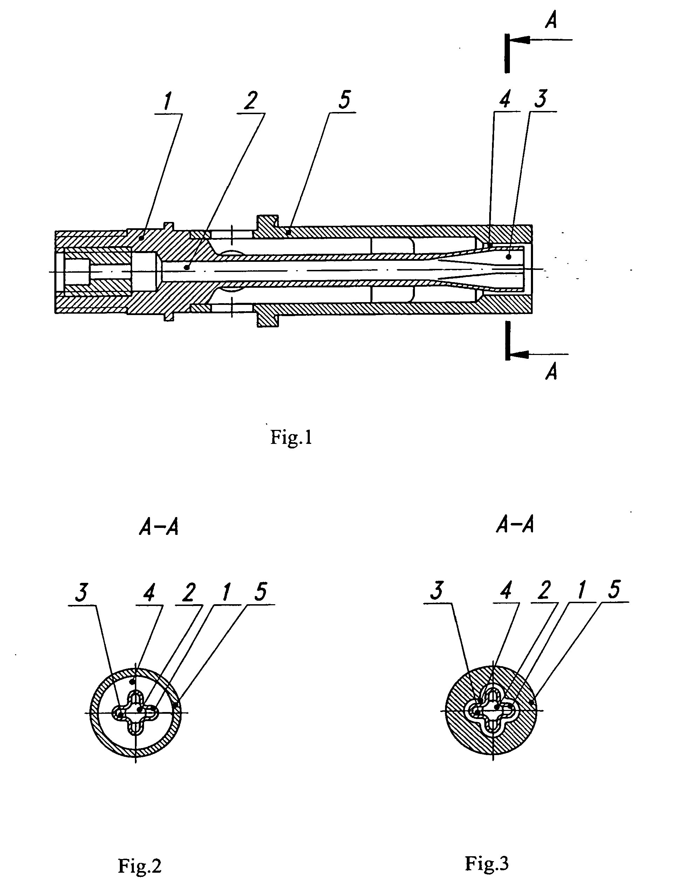

As can be seen from the Fig. 1, the coaxial-jet injection element contains a hollow tip 1 having an axial channel 2 inside, said channel connecting the oxidizer cavity with the internal cavity of the combustion chamber. The tip outlet portion has radial undulations 3. The sleeve 5 is mounted on the tip 1 providing an annular gap 4 and connecting the fuel cavity with the combustion chamber interior. In a first design option (not according to the invention), the inner surface of the sleeve 5 is cylindrical (Fig. 2). In the second design option according to the invention (Fig. 3), the sleeve inner surface is equidistant with the outer surface of tip undulations and the exit cross-section area of the clearance between the sleeve ribs and the undulations of the tip is Fᵣ=(0,6-2,2)Fₒ, where Fo is the cross section area of the tip outlet.

The proposed injection element is functioning as follows.

The oxidizer from the oxidizer cavity is supplied into the combustion chamber through the channel 2 inside the tip 1. At the place of location of radial undulations 3, the oxidizer jet is transformed to the form of the tip exit section, that is the form of the radial undulations 3, hence the jet cross section form is changed leading to an increased perimeter of the contact at a constant cross-section area. The change of the oxidizer round jet form into the star-shaped one at a constant area of the exit cross-section improves the conditions of jet disintegration and allows it to reduce the characteristic cross-section parameter of a jet and the length of its non-atomized part. Consequently, the oxidizer jet at the tip exit is predisposed to a loss of its integrity and requires less time for atomization. Such effect upon a jet allows it to improve the propellant mixing conditions at all operational modes.

The fuel from the fuel cavity is supplied into the combustion zone through the clearance 4 between the tip 1 and the sleeve 5. In a first design option (not according to the invention), the sleeve inner surface and the jet outer surface have the cylindrical form. In the second design option, at the place of location of channels 5, the jet of the fuel obtains the form of the profiled annular gap between the tip 1 and the sleeve 5, i.e. the fuel jet becomes equally spaced to the oxidizer jet.

### Design options of the invention

The applicant of patent has manufactured pilot models of proposed injection elements and tested them as integrated into LOX-LH₂ combustion chambers.

The geometry parameters and propellant supply modes should be defined depending on the engine thrust.

The coaxial-jet injection element with radial undulations in the tip outlet part and a cylindrical sleeve has been tested in the model 25 kN LOX-LH₂ combustion chamber in an engine operating with a staged-combustion (fuel-rich) cycle. During the tests, a mixing efficiency ϕ_{κ}=0,997±0,0016 has been obtained, that exceeds the value of coefficient ϕ_{κ} =0,994±0,0009 specified for reference injection elements with a cylindrical tip and a cylindrical sleeve.

The coaxial-jet injection element with radial undulations in the tip outlet portion and a sleeve with equidistant profiled inner surface has been tested in the 25 kN LOX-LH₂ subscale combustion chamber. During the tests, the mixing efficiency ϕ_{κ} =0,994±0,0016 has been obtained, that exceeds the value of equivalent coefficient ϕ_{κ} = 0,9918±0,001 specified for reference injection elements with a cylindrical tip and a cylindrical sleeve.

### Potential industrial applications

The implementation of the said injection elements in the developed LRE instead of injection elements with cylindrical surfaces at their outlet part will allow it to increase the specific impulse value approximately by (0,3-0,5)% and to provide maximum attainable mixing efficiency for new engines operating with staged combustion cycle. Maximum completeness of mixing may be achieved with the use of coaxial-jet injection elements with radial undulations in the tip outlet portion and the use of a sleeve with an equidistant profiled inner surface.

It is also rational to use the said injection elements in the LOX-methane LREs.

## Claims

1. A coaxial-jet injection element including a hollow tip (1) connecting a cavity of one component of a propellant with a combustion zone, and a sleeve (5) that surrounds said tip (1) providing a clearance and connecting a cavity of another component of the propellant with the combustion zone, the tip having an outlet portion which is provided with undulations and surrounded by an outlet portion of the sleeve, **characterized in that** the inner surface of the outlet portion of the sleeve (5) is equidistant relative to the outer surface of the tip (1) outlet portion undulations.

2. Coaxial-jet injection element as claimed in claim 1, **characterized in that** the outlet cross-section area between the inner surface of the sleeve (5) and the outer surface of the undulated tip (1) is Fᵣ= (0,6-2,2) Fₒ, where Fₒ is the cross-section area at the tip outlet.

## Patentansprüche

1. Koaxialstrahl-Injektionselement mit einer hohlen Spitze (1), die einen Hohlraum mit einer Komponente eines Treibmittels mit einer Verbrennungszone verbindet, sowie einer Hülse (5), die die genannte Spitze (1) umgibt, so dass ein Abstand gewahrt ist und ein Hohlraum mit einer anderen Komponente des Treibmittels mit der Verbrennungszone verbunden wird, wobei die Spitze einen Auslassabschnitt aufweist, der wellenartig ausgeführt ist und von einem Auslassabschnitt der Hülse umgeben wird, **dadurch gekennzeichnet, dass** die innere Oberfläche des Auslassabschnitts der Hülse (5) bezüglich der Außenoberfläche des Auslassabschnittes der gewellten Spitze (1) äquidistant ist.

2. Koaxialstrahl-Injektionselement nach Anspruch 1, **dadurch gekennzeichnet, dass** die Auslass-Querschnittsfläche zwischen der inneren Oberfläche der Hülse (5) und der Außenoberfläche der gewellten Spitze (1) Fᵣ = (0, 6-2, 2) Fₒ beträgt, wobei Fₒ die Auslass-Querschnittsfläche der Spitze ist.

## Revendications

1. Élément d'injection à jet coaxial comprenant une pointe creuse (1), qui relie une cavité avec une composante d'un moyen propulseur à une zone de combustion, et comprenant une douille (5) qui entoure ladite pointe (1) de telle façon qu'il existe une distance et qu'une cavité est reliée avec une autre composante du moyen propulseur à la zone de combustion, dans lequel la pointe comprend un tronçon de sortie, qui est réalisé de manière ondulée et qui est entouré par un tronçon de sortie de la douille,
**caractérisé en ce que** la surface intérieure du tronçon de sortie de la douille (5) est équidistante par référence à la surface extérieure du tronçon de sortie de la pointe ondulée (1).

2. Élément d'injection à jet coaxial selon la revendication 1, **caractérisé en ce que** la surface transversale de sortie Fr entre la surface intérieure de la douille (5) et la surface extérieure de la pointe ondulée (1) est égale à (0,6 - 2,2) Fo, dans laquelle Fo est la surface transversale de sortie de la pointe.
